Europäisches Patentamt

European Patent Office

Office européen des brevets

(19)

(11) Veröffentlichungsnummer: **0 277 134**
**B1**

(12) **EUROPÄISCHE PATENTSCHRIFT**

(45) Veröffentlichungstag der Patentschrift: 09.05.90

(51) Int. Cl.⁵: **F 16 K 1/20, F 16 K 31/44**

(21) Anmeldenummer: **86906421.2**

(22) Anmeldetag: **17.10.86**

(86) Internationale Anmeldenummer:
**PCT/HU86/00054**

(87) Internationale Veröffentlichungsnummer:
**WO 87/02437 23.04.87 Gazette 87/09**

(54) **SCHNELL BETÄTIGBARES VENTIL.**

(30) Priorität: **18.10.85 HU 402585**

(43) Veröffentlichungstag der Anmeldung:
**10.08.88 Patentblatt 88/32**

(45) Bekanntmachung des Hinweises auf die
Patenterteilung:
**09.05.90 Patentblatt 90/19**

(84) Benannte Vertragsstaaten:
**AT BE DE FR GB IT NL SE**

(56) Entgegenhaltungen:
**DE-A- 110 688**
**DE-A-1 950 831**
**DE-A-2 911 949**
**DE-C- 812 279**
**DE-C- 812 280**

(73) Patentinhaber: **SZéKELY, Lajos**
**Kolostor u. 17**
**H-1037 Budapest (HU)**
(73) Patentinhaber: **HáMORI, Attila**
**Emöd u. 70**
**H-1031 Budapest (HU)**
(73) Patentinhaber: **VIDA, Miklos**
**Baranyai u. 27**
**H-1117 Budapest (HU)**

(72) Erfinder: **KUNOS, Károly**
**Szivárvány u. 4**
**H-2040 Budaörs (HU)**

(74) Vertreter: **Patentanwälte Viering & Jentschura**
**Steinsdorfstrasse 6**
**D-8000 München 22 (DE)**

**Beschreibung**

Die Erfindung betrifft ein schnellbetätigbares Ventil, insbesondere für flüssige oder gasförmige Medien fördernde Rohrleitungen, das mit einer Verdrehung von etwa 90° geschlossen oder geöffnet werden kann.

Es sind zahlreiche schnellbetätigbare Ventile bekannt, die die wohlbekannten positiven Eigenschaften der Ventile mit der Möglichkeit einer raschen Betätigung ergänzen. Eine derartige Lösung wird z.B. in der HU—A—159 431 erläutert, die eine Kombination eines Kugelzapfens und eines Ventils darstellt. Die elastische Einspannung des Ventilkörpers in dessen Schließstellung die die Grundbedingung eines dichten Abschlusses darstellt — wird bei dieser Konstruktion durch den Medienendruck sichergestellt.

Der Ventikörper wird bei der HU—A—156 529 durch das schräge Andrücken von Kugeln, bei der HU—A—128 158 mit Hilfe einer Nockenwelle, während bei der HU—A—117 086 mit Hilfe einer exzentrischen Welle in einer mit der Mittellinie des Ventilsitzes zusammenfallenden Richtung bewegt. In der HU—A—174 241 wird ein spezielles Ventil nach dem Prinzip des Bajonettverschlusses beschrieben. Die HU—A—166 856 erläutert ein klappenartig verdrehbares Ventil mit einem durch hydraulische Hilfsenergie betätigten Mechanismus.

Das in der HU—A—159 431 beschriebene "Kugelventil" ist zum dichten Abschluß von Medien mit niedrigem Druck oder mit einer der ursprünglich geplanten entgegengesetzten Strömungsrichtung nicht geeignet, sa daß es nur in speziellen Fällen anwendbar ist. Die in den HU—Patentschriften Nr. 156 529, 128 158 und 117 086 beschriebenen Lösungen können zwar die notwendige Einspannung des Ventilkörpers gewährleisten, ihr gemeinsamer Nachteil besteht jedoch darin, daß sie den Ventilkörper nur in einer mit der Mittellinie des Ventilsitzes zusammenfallenden Richtung und nur relativ geringfügig anheben können, wodurch der Strömungswiderstand dieser Ventile ziemlich hoch ist. Die Vorrichtung gemäß der HU—A—174 241 hebt den Ventilkörper ebenfalls in axialer Richtung, allerdings schon in ausreichendem Maße an, doch ihr Aufbau und ihre Betätigung sind wegen der Zusammengesetzten, axialen und verdrehenden Bewegung recht kompliziert. Bei der Vorrichtung gemäß der HU—A—166 856 wird der Ventilkörper infolge der klappenartigen Betätigung vollständig aus dem Strömungsweg entfernt, ihr Nachteil besteht jedoch in der komplizierten und störanfälligen Ausbildung infolge der Anwendung von Hilfsenergie.

Aus der DE—A—2 911 949 ist ein Ventil der im einleitenden Teil des Patentanspruchs 1 angegebenen Art bekannt. Das Andruckelement in Form einer Rolle ist an mit dem Hubstößel eines Schließelektromagneten verbundenen Armen befestigt und die Lauffläche wird von einem Kulissenschlitz gebildet, der für einen möglichst hohen Anpreßdruck des Ventilkörpers gegen den Ventilsitz leicht schräg zur Ventilsitzebene verläuft.

Die Aufgabe der Erfindung ist die Schaffung einer derartigen Lösung, bei welcher das Ventil eine einzige, durch einfache Verdrehung betätigbare, im geschlossenen Zustand eine zuverlässige Einspannung des elastischen Ventilkörpers gewährleistende mechanische Übertragung enthält und der Ventilkörper im geöffneten Zustand vollständig aus dem Strömungsweg entfernt werden kann, wobei diese Eigenschaften durch eine einfache, betriebssichere und keine Hilfsenergie benötigende Konstruktion erzielt werden.

Die gestellte Aufgabe wird durch die Merkmale im Patentanspruch 1 gelöst. Das erfindungsgemäße schnellbetätigbare Ventil der eingangs erwähnten Art, weist einen elastischen, klappenartig bewegbaren Ventilkörper auf, der auf einem Ventilhebel befestigt ist, der um eine Außerhalb der Mittellinie des Ventilsitzes angeordnete Achse vardrehbar ist. Das Ventil weist eine Hilfsachse auf, deren Mittellinie in einem vorgegebenen Abstand, parallel zur Mittellinie der ersten Achse verläuft und auf dieser Hilfsachse ist verdrehbar ein Bewegungshebel oder eine Bewegungsscheibe bzw. ein ähnliches starres Banelement befestigt, auf welchem ein Andruckelement, zweckmäßigerweise eine Rolle (z.B. ein Scheibenkugellager) angebracht ist, deren Mittellinie in einem festgelegten Abstand von der Hilfsachse verläuft. Die Rolle ist auf einer für diesen Zweck ausgebildeten geraden oder annähernd geraden Lauffläche des Ventilhebels oder eines mit diesem durch die gemeinsame Achse starr verbunden en Hilfshebels derart abgestützt, daß bei der vollen Einspannung des Ventilkörpers die mit der Rolle in Berührung stehende Lauffläche senkrecht zu der die Mittellinien der Rolle un der Hilfsachse verbindenden Geraden ist, woraus sich eine Totpunktlage ergibt. Diese Ausbildung hat zur Folge, daß im voll eingespannten Zustand des Ventilkörpers durch eine geringfügige Verdrehung des Bewegungshebels eine vielfach geringere Verschiebung des Ventilhebels erreicht wird, was in den Kräfteverhältnissen gerade eine umgekehrte Wirkung hat, so daß in der Nähe der Totpunktlage eine sehr große Kraftübertragung vor sich geht. Dieser Umstand ermöglicht, daß die zum sicheren Abschluß notwendige große elastische Einspannkraft infolge des an dem Bewegungshebel auftretenden geringen Momentes auch mit der Hand leicht ausgeübt werden kann.

Erfindungsgemäß ist es zweckmäßig, wenn die Verdrehung des Bewegungshebels durch einen Anschlag begrenzt ist, der am Ventilgehäuse bzw. auf dem Ventilhebel oder dem Hilfshebel angeordnet ist. Der Anschlag ist derart befestigt, daß sich der Bewegungshebel hinter der Totpunktlage noch um einige Grade weiterverdrehen kann, wodurch die geschlossene Lage des Ventils selbstarretierend wird.

Nach einer vorteilhaften Ausführungsform der Erfindung ist symmetrisch oder annähernd symmetrisch zur erwähnten ersten Lauffläche auf dem Ventilhebel oder auf dem Hilfshebel auch eine andere Lauffläche ausgebildet, auf welcher die Rolle beim Öffnen des Ventils abgestützt ist. Die beiden Laufflächen sind zweckmäßigerweise als die beiden Mantelflächen einer Nut ausgebildet. In dieser Ausbildung ist zwischen dem Ventilhebel und dem Ventilgehäuse oder zwischen dem Hilfshebel und dem Ventilgehäuse ein elastisches Anschlagelement eingebaut, das im geöffneten Zustand des Ventils zusammengedrückt wird, so daß sich im ganz geöffneten Zustand eine dem vollständig geschlossenen Zustand ähnliche Totpunktlage bzw. ähnliche Kräfteverhältnisse einstellen. Die Verdrehung des Bewegungshebels wird auch hier in einer um einige Grade weiterverdrehten Lage durch einen Anschlag verhindert, also der geöffnete Zustand des Ventils ist dem geschlossenen Zustand ganz ähnlich selbstarretierend. Der zur geöffneten Lage zugeordnete Anschlag ist ebenfalls auf dem Ventilgehäuse oder auf dem Ventilhebel bzw. Hilfshebel befestigt.

Bei einer anderen vorteilhaften Ausführungsform der Erfindung ist an der Achse des Ventilhebels eine Feder, zweckmäßigerweise eine Spiralfeder, oder Gewichtslast derart angeschlossen, daß sie den Ventilkörper in Öffnungsrichtung zu verdrehen versucht. In diesem Fall ist keine zweite Lauffläche sowie kein im geöffneten Zustand zusammengedrücktes elastisches Anschlagelement notwendig, allerdings ist das Öffnen des Ventils nur mit einer durch die Feder oder die Gewichtslast bestimmten Kraft möglich, während beim Schließen des Ventils auch diese Kraft zu überwinden ist.

In einer vorteilhaften Variante dieser Ausführungsform ist auf dem Ventilgehäuse ein solcher, an sich bekannter verstellbarer Anschlag angebracht, der die Verdrehung des Bewegungshebels in Öffnungsrichtung begrenzt, also die Einstellung von verschiedenen geöffneten Lagen ermöglicht.

Diese Lösung verbessert durch die günstigen Übertragungsverhältnisse diejenige bekannte positive Eigenschaft der Ventile darin, daß die Menge des durch sie durchströmenden Mediums fein geregelt werden kann.

Bei einer weiteren vorteilhaften Ausführungsform der Erfindung ist diejenige Lauffläche, auf wecher die Rolle beim Schließen abgestützt ist, so ausgebildet, daß sie im Bereich des im Moment des Aufliegens des Ventilkörpers auf dem Ventilsitz mit der Rolle in Berührung stehenden Flächenelementes eine geringfügige Neigung in Schließrichtung aufweist, also dieser Flächenabschnitt leicht konkav ist. Diese Ausbildung ermöglicht, daß die Kraftübertragung auch in dieser Lage den dem Totpunkt näher liegenden Lagen ähnlich ist.

Die Erfindung wird ausführlicher anhand von vorteilhaften Ausführungsbeispielen unter Bezugnahme auf die beigefügte Zeichnung erläutert.

In der Zeichnung zeigen:

Fig. 1 eine mögliche Ausführungsform des erfindungsgemäßen, schnellbetätigbaren Ventils, überwiegend im Schnitt und

Fig. 2 die Ansicht einer anderen Ausführungsform des erfindungsgemäßen, schnellbetätigbaren Ventils.

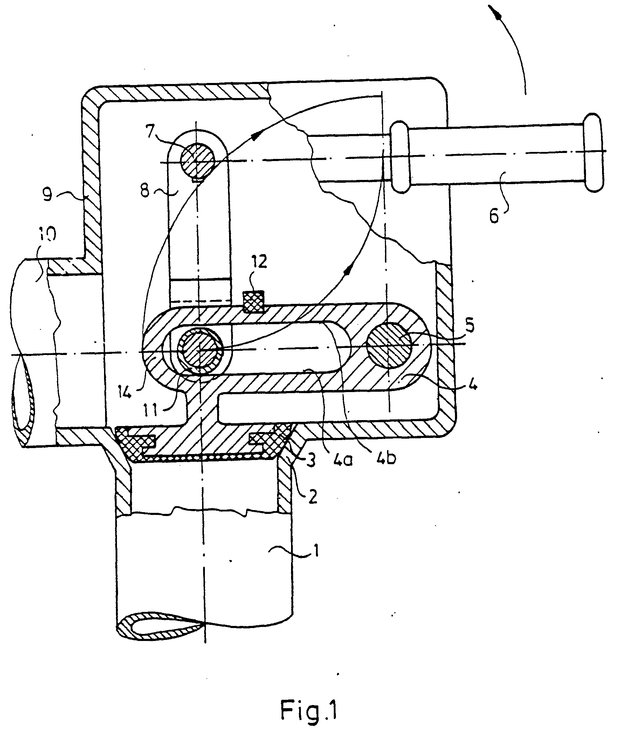

Die Ausführungsform gemäß Fig. 1 ist in Form eines Eckventils ausgebildet. Dieses Ventil hat ein Ventilgehäuse 9, an welchem Rohrstutzen 1 und 10 in an sich bekannter Weise abgedichtet angeschlossen sind, z.B. durch Schweißen, durch Gewinde- oder Flanschverbindung, aus einem Stück gegossen usw. Im Ventilgehäuse 9, am Ende des Rohrstutzens 1, ist ein Konischer Ventilsitz 2 für einen Kugelabschnittsförmigen Ventilkörper 3 ausgebildet, auf dessen Metallgrundkörper ein elastischer Belag vulkanisiert ist. Der Ventilsitz und der Ventilkörper können selbstverständlich auch in einer anderen bekannten Art und Weise ausgeführt sein.

Der Ventilkörper 3 ist fest mit einem Ventilhebel 4 verbunden, der auf einer außerhalb der Mittellinie des Ventilsitzes 2 angeordneten Achse 5 angebracht ist, wobei, der Ventilhebel 4 und die Achse 5 derart im Ventilgehäuse 9 eingebaut sind, daß der Ventilhebel 4 frei um die Mittellinie der Achse verdreht werden kann. In der Mittellinie des Ventilhebels 4 ist eine Nut ausgebildet, deren beiden Mantelflächen Lauflächen 4a und 4b für eine Rolle 11 bilden, die an einem Ende eines momentübertragenden Bewegungshebels 8 befestigt ist. Die abgeschlossenen Enden der Nut bilden jeweils einen Anschlag 14 sowohl für die geöffnete als auch für die geschlossene Lage.

Die Rolle 11 ist in an sich bekannter Weise, z.B., mit Hilfe eines durch Schrumpfverbindung befestigten Zapfens, an dem Bewegungshebel 8 angebracht. Die Form des Bewegungshabels 8 ist so ausgebildet, daß er die Bewegung des Ventilhebels 4 mit dem Ventilkörper 3 zwischen der geöffneten und geschlossenen Lage nicht verhindert. Der Bewegungshebel 8 ist in bekannter Weise, z.B. durch eine Keilverbindung, mit einer Hilfsachse 7, deren Mittellinnie parallel sur Mittellinie der Achse 5 verläuft, starr verbunden, die abgedichtet aus dem Ventilgehäuse 9 herausgeführt ist und dort mit einem Betätigungshebel 6 ebenfalls starr verbunden ist. Die abgedichtete Herausführung der Hilfsachse 7 kann mit Hilfe von Stopfbuchsen, O-Ringen oder anderen bekannten Mitteln gelöst werden.

Figur 1 veranschaulicht den beim Abschluß erreichten Totpunkt, d.h. den am meisten eingespannten Zustand des Ventilkörpers 3. Aus diesem Totpunkt kann der Bewegungshebel 8 mit einer ganz geringen Kraft in eine beliebige Richtung bewegt werden, wobei die Weiterbewegung durch die elastische Verformung des Ventilkörpers 3 unterstützt wird. Wenn der Bewegungshebel 8 nun in der den Pfeilen entgegengesetzten Schließrichtung bewegt wird, stößt die Rolle 11 an den Anschlag 14 für die geschlossene Lage und diese Lage ist selbstarretierend. In geöffneter Lage wird anstelle des Ventilkörpers 3 ein an den Ventilhebel 4 montiertes elastisches Anschlagelement 12 an das Ventilgehäuse 9 gepreßt, was eine der geschlossenen Lage ähnliche elastische Selbstarretierung ergibt.

Das Öffnen des Ventils erfolgt so, daß der Betätigungshebel 6 in der durch die Pfeile bezeichneten, dem Uhrzeigersinn entgegengesetzten Richtung um 90° (und um einige Grade hinter den Totpunkt) verdreht wird, wodurch infolge der Zwangsverbindung mit dem Bewegungshebel 8 auch der Ventilhebel 4 um 90° verdreht wird und der Ventilkörper 3 vollständig aus dem Strömungsweg entfernt wird.

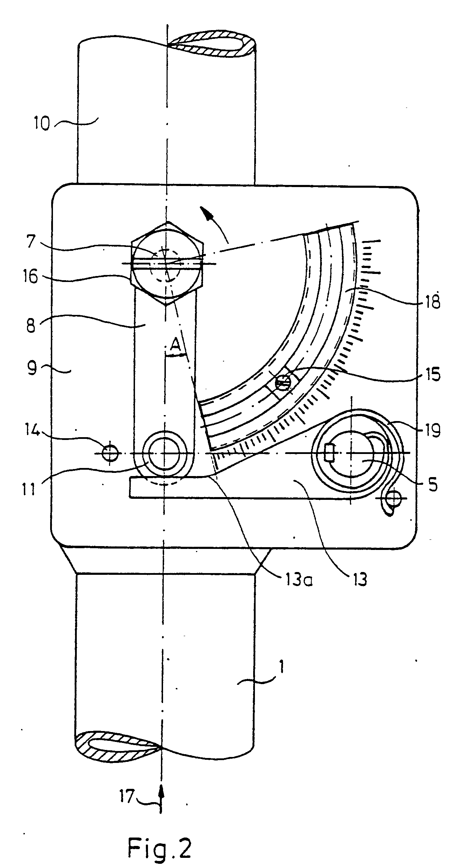

Figur 2 zeigt eine einachsige Ausführungsform der Erfindung als Übergangsventil.

Bei dieser Ausführungsform ist die Achse 5 aus dem Ventilgehäuse 9 abgedichtet herausgeführt, während die im Ventilgehäuse ausgebildete Bohrung der Hilfsachse 7 nicht im Innenraum mündet. So befinden sich der auf der Hilfsachse befestigte momentübertragende Bewegungshebel 8 mit der Rolle 11 sowie auch der auf die Achse 5 starr angebrachte Hilfshebel 13 alle außerhalb des Ventilgehäuses 9.

Der Hilfshebel 13 ist mit einer Lauffläche 13a versehen, auf welcher die Rolle 11 beim Abschluß abgestützt ist. Von der dargestellten Totpunktlage ausgehend befindet sich um einen Winkel A versetzt diejenige Lage des Bewegungshebels 8 beim Aufliegen des (hier nicht dargestellten) Ventilkörpers, bei welcher die Lauffläche 13a eine geringfügige Neigung in Schließrichtung aufweist, damit die Einspannung des Ventilkörpers ein noch geringeres Drehmoment auf der Hilfsachse 7 benötigt. Das Anstoßen hinter dem Totpunkt im geschlossenen Zustand wird durch einen am Ventilgehäuse 9 befestigten Anschlag 14 sichergestellt.

In dieser Ausführungsform enthält der Hilfshebel 13 keine zum Öffnen notwendige Lauffläche wie die Lauffläche 14b in Fig. 1, deshalb ist die Achse 5 durch eine Spiralfeder 19 in Öffnungsrichtung belastet. In dieser Variante steht zum Öffnen des Ventils nur die Federkraft zur Verfügung, so daß der Einsatz dieses Ventils nur in der durch den Pfeil 17 bezeichneten Strömungsrichtung zweckmäßig ist.

Am Ende Hilfsachse 7 befindet sich hier an stelle eines Bedienungshebels ein Sechskantendstück 16, das nur mit Hilfe eines seiner Form entsprechenden Bedienungsschlüssels verdreht werden kann. Diese Lösung ist insbesondere dann vorteilhaft, wenn die Bedienung durch unbefugte Personen verhindert werden soll.

In gewissen Fällen ist es notwendig, daß die geöffnete Lage des Ventils in verschiedenem Maße beschränkt wird. Für diesen Zweck biete die erfindungsgemäße Konstruktion eine besonders vorteilhafte und feine Einstellmöglichkeit, wenn die Verdrehung des Bewegungshebels 8 durch einen verstellbaren Anschlag 15 begrenzt wird. Dabei gehört in der Nähe der geschlossenen Lage des Ventils einer gut meßbaren Verdrehung des Bewegungshebels 8 eine ganz geringe Ventilkörperbewegung. Der verstellbare Anschlag 15 kann nach einer beliebigen bekannten Lösung ausgeführt sein. Fig. 2 zeigt eine mit Skala versehene, zwischen zwei Schienen ausgebildete Führungsbahn 18 und einen darin geführten, mit einer einfachen Schraube arretierbaren Anschlag 15.

Das Öffnen und Schließen des Ventils erfolgt hier ähnlich wie bei der Variante gemäss Fig. 1, mit dem Unterschied, das hier der Öffnungsvorgang nach dem Verlassen des Totpunktes der geschlossenen Lage durch die Spiralfeder 19 auromatisch zum Ende geführt wird.

Aus der Kombination der beiden vorgestellten Ausführungsformen können mehrere weitere Ausführungsvarianten gebildet werden. Bei einer solchen kombinierten vorteilhaften Ausführungsform könnten z.B. der Bewegungshebel 8 mit der Rolle 11 und der Hilfshebel 13 ähnlich wie bei der Ausführungsform gemäss Fig. 2 außerhalb des Ventilgehäuses 9 angeordnet sein, doch der Hilfshebel 13 könnte ähnlich wie der Ventilhebel 4 in Fig. 1 mit zwei Laufflächen versehen sein, wodurch die Spiralfeder 19 überflüssig wäre und das Ventil in eine beliebige Strömungsrichtung des Mediums eingebaut werden könnte.

Wie es aus den obigen Ausführungen ersichtlich ist, ist das erfindungsgemäß Ventil wirklich sehr einfach aufgebaut, es kann schnell betätigt werden, beim Öffnen wird sein Ventilkörper ganz aus dem Strömungsweg entfernt und enthält einen günstigen Übertragungsmechanismus, der die Ausübung einer zum sicheren Abschluß notwendigen großen Einspannkraft mit einer relativ geringen manuellen Kraftausübung ermöglicht. Das erfingunsgemäße Ventil gewährleistet weiterhin eine selbstarretierte geöffnete oder geschlossene Lage und ist auch zur feinern Einstellung von im verschiedenen Maße geöffneten Lagen geeignet.

**Patentansprüche**

1. Schnellbetätigbares Ventil, insbesondere für flüssige oder gasförmige Medien fördernde Rohrleitungen, mit einem in einem Ventilgehäuse (9) klappenartig bewegbaren, in geschlossener Lage auf einem Ventilsitz (2) aufliegenden elastischen Ventilkörper (3), der auf einem um eine außerhalb der Mittellinie des Ventilsitzes (2) angeordnete Achse (5) verdrehbaren Ventilhebel (4) befestigt ist, wobei dadurch gekennzeichnet, auf dem Ventilhebel (4) oder einem mit diesem auf der gleichen Achse (5) angebrachten Hilfshebel (13) bzw. einem ähnlichen starren Bauelement wenigstens eine Lauffläche (4a, 4b; 13a) ausgebildet ist, auf welcher ein Andruckelement, zweckmäßigerweise eine Rolle (11) abgestützt ist, die auf einem Bewegungshebel (8), einer Bewegungsscheibe oder einem ähnlichen starren Bauelement befestigt ist, daß der Bewegungshebel (8) derart auf einer Hilfsachse (7), deren Mittellinie parallel zur Mittellinie der ersten Achse (5) verläuft, befestigt ist oder mit einem solchen Drehpunkt im Ventilgehäuse (9) angebracht ist, daß die Rolle (11) mit dem Ventilhebel (4) oder mit dem Hilfshebel (13) in einer Ebene liegt, und daß in der am meisten eingespannten Totpunktlage des Ventilkörpers (3) der mit der Rolle (11) in Berührung stehende Laufflächen-

abschnitt senkrecht oder annähernd senkrecht zu der die Hilfsachse (7) und die Rolle (11) verbindenden Geraden ist.

2. Schnellbetätigbares Ventil nach Anspruch 1, dadurch gekennzeichnet, daß es einen die Verdrehung des Bewegugungshebels (8) um die Hilfsachse (7) begrenzenden und um einige Grade hinter dem Totpunkt der geschlossenen Lage befindlichen Anschlag (14) aufweist.

3. Schnellbetätigbares Ventil nach Anspruch 1 oder 2, dadurch gekennzeichnet, daß auf dem Ventilhebel (4) oder dem Hilfshebel (13) symmetrisch oder annähernd symmetrisch zur Lauffläche (4a; 13a) eine weitere Lauffläche (4b) ausgebildet ist, auf welcher die Rolle (11) beim Öffnen des Ventils abgestützt ist und deren mit der Rolle (11) in Berührung stehender Flächenabschnitt in der am meisten geöffneten Lage senkrecht oder annähernd senkrecht zu der die Rolle (11) und die Hilfsachse (7) verbindenden Geraden ist.

4. Schnellbetätigbares Ventil nach Anspruch 3, dadurch gekennzeichnet, daß ein zwischen dem Ventilhebel (4) oder dem Hilfshebel (13) und dem Ventilgehäuse (9) angeordnetes, im geöffneten Zustand des Ventils zusammengedrucktes elastisches Anschlagelement (12) sowie ein die Verdrehung des Bewegungshebels (8) um einige Grade hinter dem Totpunkt der geöffneten Lage begrenzender Anschlag (14) vorgesehen sind.

5. Schnellbetätigbares Ventil nach Anspruch 1 oder 2, dadurch gekennzeichnet, daß an der Achse (5) des Ventilhebels (4) eine die Achse (5) in Öffnungsrichtung belastende Feder, zweckmäßigerweise eine Spiralfeder (19), oder eine Gewichtslast angeschlossen ist.

6. Schnellbetätigbares Ventil nach einem der Ansprüche 1 bis 5, dadurch gekennzeichnet, daß die erste Lauffläche (4a; 13a) im Bereich des mit der Rolle (11) in der geschlossenen Lage des Ventils in Berührung stehenden Flächenabschnitts einen geringfügig konkaven Bogen aufweist.

7. Schnellbetätigbares Ventil nach Anspruch 1 oder 2, dadurch gekennzeichnet, daß es eine auf dem Ventilgehäuse (9) befestigte Führungsbahn (18) und einen darin verstellbaren, zur Verhinderung der Verdrehung des Bewegungshebels (8) in Öffnungsrichtung geeigneten Anschlag (15) aufweist.

## Revendications

1. Valve à actionnement rapide, en particulier pour des conduites de transport de fluides liquides ou gazeux, munie d'une élément de valve ou clapet élastique (3) mobile à la façon d'un volet dans un corps de valve (9) et en appui, en position fermée, sur un siège de valve (2), le clapet de valve étant fixé sur un levier rotatif de clapet (4) disposé hors de l'axe du siège de valve (2), dans laquelle est formée, sur le levier de clapet (4) ou sur un levier auxiliaire (13) monté avec celui-ci sur le même axe (5) ou sur un élément de structure rigide similaire, au moins une surface de guidage (4a, 4b, 13a) sur laquelle vient en appui un élément de pressage, avantageusement un rouleau (11), qui est fixé sur un levier d'actionnement (8), un disque d'actionnement ou un élément de structure rigide similaire, caractérisée en ce que le levier d'actionnement (8) est fixé sur un axe auxiliaire (7) dont la ligne moyenne est parallèle à la ligne moyenne du premier axe (5) ou est monté sur un tel point de rotation dans le corps de valve (9), de telle façon que le rouleau (11) soit situé dans le plan du levier de clapet (4) ou dans le plan du levier auxiliaire (13) et en ce que, dans la position de point mort du clapet de valve (3) soumise au pressage maximal, la partie de surface de guidage en contact avec le rouleau (11) soit perpendiculaire ou sensiblement perpendiculaire à la droite reliant l'axe auxiliaire (7) et le rouleau (11).

2. Valve à actionnement rapide selon la revendication 1, caractérisée en ce qu'elle comporte une butée (14) limitant la rotation du levier d'actionnement (8) autour de l'axe auxiliaire (7) et qui se trouve placée à quelques degrés audelà du point mort de la position fermée.

3. Valve à actionnement rapide selon la revendication 1 ou 2, caractérisée en ce que, sur le levier de clapet (4) ou sur le levier auxiliaire (13), elle comporte, symétriquement ou de façon sensiblement symétrique aux surfaces de guidage (4a, 13a), une autre surface de guidage (4b) sur laquelle le rouleau (11) est en appui à l'ouverture de la valve et dont la partie de surface en contact avec le rouleau (11) se trouve, dans la position la plus ouverte, perpendiculaire ou sensiblement perpendiculaire à la droite reliant le rouleau (11) et l'axe auxiliaire (7).

4. Valve à actionnement rapide selon la revendication 3, caractérisée en ce qu'elle comporte un organe de butée élastique (12) disposé entre le levier de clapet (4) ou le levier auxiliaire (13) et le corps de valve (9) et pressé, à l'état ouvert de la valve, sur celle-ci, ainsi qu'une butée (14) limitant la rotation du levier d'actionnement (8) de quelques degrés au-delà du point mort de la position ouverte.

5. Valve à actionnement rapide selon la revendication 1 ou 2, caractérisée en ce que l'axe (5) est relié à un ressort, de préférence un ressort spiral (19) ou à une charge ponderale, sollicitant l'axe (5) dans le sens de l'ouverture.

6. Valve à actionnement rapide selon l'une des revendications 1 à 5, caractérisée en ce que la première surface du guidage (4a, 13a) présente un arc à faible concavité dans la zone de sa surface qui se trouve en contact avec le rouleau (11) en position fermée de la valve.

7. Valve à actionnement rapide selon la revendication 1 ou 2, caractérisée en ce qu'elle comporte un chemin de guidage (18) fixé sur le corps de valve (9) et une butée réglable (15) apte à arrêter la rotation du levier d'actionnement (8) dans la direction d'ouverture.

## Claims

1. Fast-actuatable valve, especially for pipelines delivering liquids and gases, with an elastic valve body flap-like movable from the open position into the closed position and vice versa in a valve housing (9) and lying on a valve seat (2) in its closed position, said valve body being fixed to a valve lever (4) turnable around an axis arranged outside the middle line of the valve seat (2), wherein at least one guiding surface (4a, 4b, 13a) is formed on the valve lever (4) or on an auxiliary lever (13) mounted on the same shaft (5) therewith, respectively on a similarly rigid constructional element, a pressure element, suitably a roller (11) being supported on said guiding surface and being fixed to a drive lever (8), a drive disk or a similarly rigid constructional element, characterised in that the drive lever (8) in such a way is mounted on an auxiliary lever (7), the middle line of which runs parallel with the middle line of the first shaft (5), or is mounted with such a point of rotation in the valve housing (9), that the roller (11) and the valve lever (4) or the auxiliary lever (13) lie in the same plane, and that in the mostly clamped dead center position of the valve body (3) the guiding surface section contacting the roller (11) is normal or nearly normal to the line connecting the auxiliary lever (7) and the roller (11).

2. Fast-actuatable valve according to claim 1, characterised in that it has a buffer (14) which limits turning of the drive lever (8) around the auxiliary lever (7) and which is located by some grades behind the dead center of the closed position.

3. Fast-actuatable valve according to claim 1 or 2, characterised in that a further guiding surface is formed on the valve lever (4) or on the auxiliary lever (13) symmetrical or nearly symmetrical to the first guiding surface (4a, 13a), the roller being supported on said further guiding surface when the valve is opened, the plane section of which contacting the roller (11) is in the mostly opened position normal or nearly normal to the line connecting the roller (11) and the auxiliary shaft (7).

4. Fast-actuatable valve, characterised in that an elastic buffer element (12) arranged between the valve lever (4) or the auxiliary lever (13) and the valve housing (9) and compressed in the open position of the valve, as well as a buffer limiting the turning of the drive lever (8) by some grades behind the dead center of the open position are provided.

5. Fast-actuatable valve according to claim 1 or 2, characterised in that a spring, suitably a spiral spring (19), loading the shaft (5) in opening direction or a dead weight is connected to the shaft (5) of the valve lever (4).

6. Fast-actuatable valve according to one of the claims 1 to 5, characterised in that the first guiding surface (4a; 13a) has a slightly concave curvature in the zone of the surface section being contacting the roller (11) in the closed position of the valve.

7. Fast-actuatable valve according to claim 1 or 2, characterised in that it comprises a guideway (18), fixed on the valve housing (9), and a buffer adjustable therein and suitable for hindering the turning of the drive lever (8) in opening direction.

Fig.1

Fig.2